# EUROPEAN PATENT APPLICATION

(11) **EP 4 270 324 A1**
(43) Date of publication of application: **01.11.2023**
(21) Application number: 22170587.4
(22) Date of filing: 28.04.2022
(51) Int. Cl.: G06T 19/00, G02B 27/00

(54) **OBJECT MANIPULATION IN MIXED REALITY**

(71) Applicant: Koninklijke Philips N.V., 5656 AG Eindhoven (NL)
(72) Inventor: LAUTE, Niels, Eindhoven (NL); VERSCHOOR, Volker Barnhart, Eindhoven (NL)
(74) Representative: Philips Intellectual Property & Standards

(57) **Abstract**

A mixed reality system comprises a head-mounted device and a processor. The head-mounted device comprises one or more sensors mounted on the head mount device, the sensors being configured to image a physical space around a user wearing the head-mounted device, and a display system adapted to overlay digital objects in the user's view of the physical space. The processor is configured to detect a physical object of interest in the physical space based on the images of the one or more sensors and generate a digital copy of the physical object. The processor then adapts one or more visual parameters of the digital copy and displays the adapted digital copy on the display system.

## Description

### FIELD OF THE INVENTION

The invention relates to the field of mixed reality. In particular, the invention relates the field of mixed reality head-mounted devices.

### BACKGROUND OF THE INVENTION

Mixed reality is the merging of real and virtual worlds to produce new environments and visualizations, where physical and digital objects co-exist and interact in real time. Mixed reality does not exclusively take place in either the physical world or virtual world, but is a hybrid of augmented reality and virtual reality.

Mixed reality (MR) and augmented reality (AR) are powerful new ways of interacting with digital content. Digital content can be placed in the physical space while physical objects/content can be enhanced by using digital overlays.

### SUMMARY OF THE INVENTION

The invention is defined by the claims.

According to examples in accordance with an aspect of the invention, there is provided a mixed reality system comprising:
a head-mounted device comprising:
   one or more sensors mounted on the head mount device and configured to image a physical space around a user wearing the head-mounted device; and
   a display system adapted to overlay digital objects in the user's view of the physical space; and
a processor configured to:
   detect a physical object of interest in the physical space based on the images of the one or more sensors;
      generate a digital copy of the physical object;
      adapt one or more visual parameters of the digital copy; and
      display the adapted digital copy on the display system.

This enables the physical space around the user to be enhanced. In particular, physical objects which the user may not be able to interact with directly can now be interacted with the use of the digital copy. For example, the physical object may be out of reach of the user or the user may be preoccupied and not be able to physically interact with the physical object.

Additionally, visual parameters of the digital copy are adapted to optimize the experience of the user interacting with the digital copy. For example, the brightness may be increased to make the object more visible, the contrast of the digital copy may be increased and/or the orientation/position of the digital copy may be changed relative to the user's field of view in order to make it easier for the user to see and interact with the digital object.

The processor may be configured to adapt the one or more visual parameters by enlarging the digital copy of the physical object relative to the size of the physical object in the images of the physical space.

Physical objects in the physical space may not be directly visible by the user (e.g. they may be too far away to be clearly visible). Thus, the digital copy of the physical object can be enlarged and displayed to the user such that it can be better visualized.

The one or more sensors may comprise one or more cameras capable of imaging the physical space at a horizontal and/or vertical angular resolution of 2.5 arc minutes per pixel or less.

Humans typically have a visual acuity of around 1 arc minute (equivalent to 20/20 vision in visual acuity scales). This means that details at far distances become blurry and indistinguishable from other details. For example, the differences between the letters "t" and "1" are minimal and, even if they can be seen at an angular size of e.g. 10 arc minutes, the small details may not be clearly visible and thus the writing becomes blurry and mostly unreadable.

Thus, a camera able to capture at an angular resolution lower than 2.5 arc minutes will be able to capture more detail than the human eye in some situations. This enables the additional detail to be presented to the human by, for example, digitally zooming into the images. The camera for example can capture at an angular resolution lower than 2 arc minutes, or 1.5 arc minutes, or 1 arc minute.

At least of the one or more cameras may have a pixel resolution higher than 3000x2000.

For example, the cameras may be 4K (3840 × 2160 pixel resolution) cameras as they are fairly common standard for ultra HD cameras. In another example, 8K (7680 × 4320 pixel resolution) cameras may be used.

The processor may be configured to generate a digital copy of the physical object based on the latest available image from the one or more sensors which contains the physical object.

This enables the digital copy to be updated in real time whilst the physical object is in the view of the sensors and, when it is not in the view, the latest available frame becomes an older frame and the digital copy shows the physical object as it was last imaged by the sensors.

The processor may be configured to adapt one or more visual parameters by changing one or more of: one or more colors of the digital copy, the contrast of the digital copy, the orientation of the digital copy and the sharpness of the digital copy.

Other visual parameters could also, or alternatively, be changed.

In one example, the user may be given the option to configure a number of visual parameters of the digital copy. Alternatively, or additionally, the processor may be further configured to automatically detect sub-optimal visual parameters and adapt the visual parameters accordingly. Algorithms exist which are capable of detecting sub-optimal visual parameters (e.g. contrast below a threshold) and which could be used. For example, smartphones often comprise a "magic wand tool" which can automatically adapt the visual parameters of images in order to improve visibility.

The one or more sensors may comprise at least two sensors mounted at different positions on the head-mounted device. The processor may be further configured to generate a three dimensional, 3D, digital copy of the physical object using the images of the physical object from both sensors.

The digital copy may be distorted, thereby to generate a 3D digital copy.

The digital copy may be pinned to a body part of the user.

This makes it easy for the user to access the digital copy. For example, the digital copy could be pinned to the hand of the user and, thus, when the user looks at their hand they can see the digital copy.

The invention also provides a method for displaying digital content in mixed reality systems, the method comprising:
imaging a physical space around a user wearing a head-mounted device;
detecting a physical object of interest in the physical space based on the images;
generating a digital copy of the physical object;
adapting one or more visual parameters of the digital copy; and
displaying the adapted digital copy overlaid on the user's view of the physical space

Adapting the one or more visual parameters may comprise enlarging the digital copy of the physical object relative to the size of the physical object in the images of the physical space.

Imaging the physical space may comprise imaging the physical space at a horizontal and/or vertical angular resolution of at most 2.5 arc minutes per pixel.

Generating a digital copy of the physical object may be based on the latest available image. Adapting one or more visual parameters may comprise changing: one or more colors of the digital copy, the contrast of the digital copy, the orientation of the digital copy and/or the sharpness of the digital copy.

The invention also provides a computer program product comprising computer program code which, when executed on a computing device having a processing system, cause the processing system to perform all of the steps of the aforementioned method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method for digitally enlarging a physical object;
Fig. 2 shows an eye looking at a physical object;
Fig. 3 shows an illustration of an MR headset;
Fig. 4 shows a method for displaying digital objects in mixed reality.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mixed reality system comprising a head-mounted device and a processor. The head-mounted device comprises one or more sensors mounted on the head mount device, the sensors being configured to image a physical space around a user wearing the head-mounted device, and a display system adapted to overlay digital objects in the user's view of the physical space. The processor is configured to detect a physical object of interest in the physical space based on the images of the one or more sensors and generate a digital copy of the physical object. The processor then adapts one or more visual parameters of the digital copy and displays the adapted digital copy on the display system.

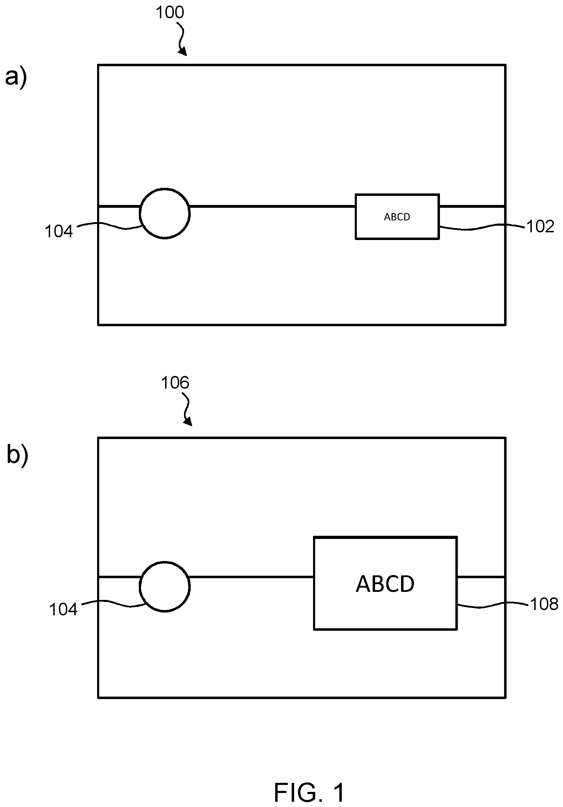

Fig. 1 illustrates a method for digitally enlarging a physical object. Fig. 1 (a) illustrates a physical scene 100 as it would be viewed by a user at a particular position. The physical scene 100 contains a physical object 102 and a reference object 104, where the size of the objects is based on the distance between the user and the objects. The physical object 102 contains writing which may be too small for the user to read from their particular position.

Thus, a system is proposed in which the user is wearing a head-mounted device (e.g. an MR or AR headset) that is capable of recording RGB video at a relatively high resolution (e.g. 4K or 8K pixel resolution). The system allows the user to select objects of interest. The objects of interest can then be taken from the video stream, manipulated (e.g. enlarging the physical object or improve the lighting conditions) and then overlaid as a digital copy on top of the physical object.

Fig. 1 b) shows a mixed reality scene 106 comprising a digital copy 108 of the physical object 102 overlaid on a view of the physical scene 100 shown in Fig. 1 a). The digital copy 108 is a digital version of the physical object 102. However, the digital copy 108 provides an enlarged view of the physical object 102 without the user having to move closer to the physical object 102. This can be seen by the use of the reference object 104 in both the scenes 100 and 106 which stays the same size, thereby showing that the user is in the same position in both scenes 100 and 106.

The user wearing the head-mounted device may be able to select a specific physical object that is in field of view (FOV) of the headset cameras. For example, the user may use their index finger and thumb to make the selection. The system could then recognize the physical object of interest and crop it out of the latest frame from the cameras.

The system is able to obtain the video stream from the cameras to identify the object that was selected by the user. For example, this could be done by detecting the user's eye gaze and/or gesture positions. Once the digital copy of the object is cropped out of the video stream, it can be visualized on top of the physical scene. For example, the digital copy can be overlaid at the same position as the corresponding physical object, as shown in Fig. 1.

The user could then move through physical space while the rendered digital copy stays in the same position in the view of the user whilst being capable of increasing in size. In this way, the user can increase the distance between the physical object while ensuring the digital copy is still readable (by e.g. increasing its size).

The system enables the user to tag specific objects or areas in the physical space such that they can be digitally cloned and optimized for reading and/or interaction. For example, if a user wants to read a specific value on a piece of paper hanging on the wall but the distance is too far to actually read it, the view of the physical object can be enlarged by the user selecting it and the system generating a digital copy which can be pinned on top of the physical object, essentially replacing it. This allows the user to move around, and the digital overlay will be available at all times in the same position but enlarged so it can be read from a greater distance as well.

The resolution of the digital copy is thus such that the image can be enlarged to reveal finer detail than the user could identify from the original view of the physical space, with the naked eye.

The digital copy may be synchronized with the physical object, thus showing a digital copy of the physical object in real time. The digital copy could thus be regarded as an optimized, continuous video stream of the physical object. In this case, the enhanced, real-time digital copy can only be seen whenever the user is actively looking at the object or, more accurately, whenever at least one camera is able to image the physical object. In the case where the user is not looking at the object, or the field of view is blocked, the last known frame containing an image of the physical object can be shown with an indication, or visual effect, that the user is not looking at a real time version.

With digital and mixed reality content becoming more present in the physical space, users might prefer digital content over physical content as the rendering and appearance can be optimized for the conditions the user is in. For example, font sizes can be enlarged and colors can be optimized for better contrast and lighting conditions.

This is clearly not possible for physical objects (e.g. displays displaying content or non-digital objects). Thus, sub-optimal conditions usually result in users having to come closer to objects to read the written content of the physical object or to see the details of the physical object. Additionally, in many healthcare contexts, the lighting conditions are not optimal, thereby reducing the visibility of physical objects.

In a first use case, a physician wearing a mixed reality headset may want to achieve vascular access. An infrared camera on headset is be able to perceive the vascular structure on a subject's leg. The physician then views the vasculature by saying "show vasculature". The mixed reality system then transforms the infrared signal from the infrared camera to the RGB spectrum, thereby generating a digital color copy of the vasculature.

The digital copy is then distorted/warped separately for each eye. This can be achieved by using the known location of eyes with respect to the camera. Gaze tracking could be used to determine the relative location of the eyes. The digital color copy of the subject's anatomy is then displayed on the physician's headset, thus enabling the physician to see where best to place a needle.

If the procedure is taking a long time, the physician may decide to place the view of the leg overlaid with the digital copy of the vasculature in front of him (i.e. in a different position). This is possible as the camera will likely have a relatively large field of view and thus be able to image the leg and corresponding vasculature even if the physician is not able to look directly at it. Thus, the physician can now see their hands without straining their neck (by looking down constantly), thereby improving ergonomic posture.

In a second use case, the mixed reality system could be used to manage contrast injector settings. When taking angiograms during an interventional procedure, a nurse is typically in control of the contrast injector. The contrast injector settings are visualized on a display on the system. However, since the nurse needs to move around to perform other tasks, the display is not always readable.

Thus, the nurse could wear an MR headset. When the nurse looks over at the injector, the system could recognize the injector and its display and display an enhanced/larger (and therefore readable) live view of the injector display with the pressure/time values overlaid on the location of the display.

Additionally, the nurse could switch to an 'interpreted view' mode. In this mode, the system could recognize the values on the display (e.g. by means of optical character recognition - OCR) and display them in an improved format which enables the nurse to read the values no matter the distance to the injector display. The improved format may be based on knowledge of the resolution/size of the headset's display system. Thus, the nurse is able to reduce visual clutter (e.g. other visual information in the video feed) and focus only on the key information.

The distance at which physical objects can be seen clearly differs and is typically dependent on many factors including: the size of the object, the visual acuity of the person and lighting/environmental conditions.

The size of the object affects the distance at which it can be seen clearly as larger objects will be visible from further whilst smaller objects will not. In order to avoid having to consider both the distance between the person and an object and the size of the object, it may be beneficial to refer to an angular resolution which depends on the distance and the size of the object.

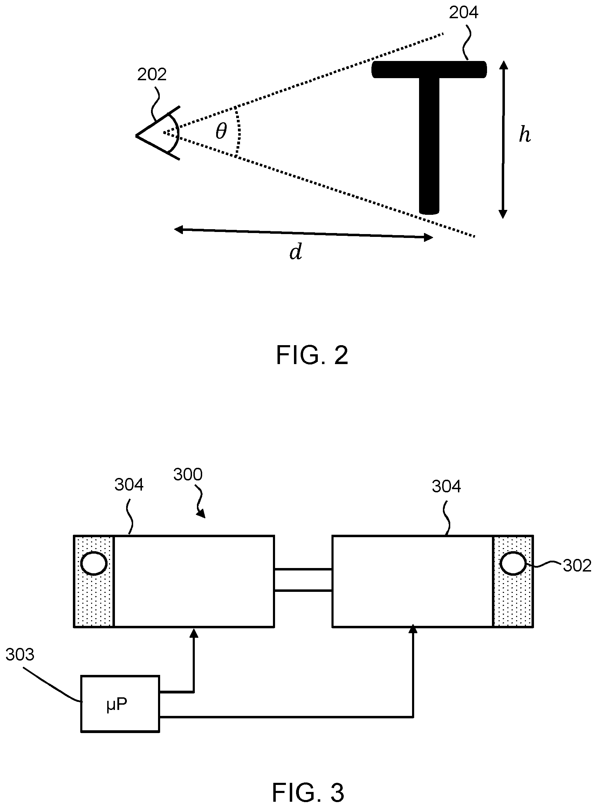

Fig. 2 shows an eye 202 looking at a physical object 204. In this case, the physical object 204 is a capital letter "T". The distance between the eye 202 and the letter 204 is d and the height of the letter 204 is h. Thus, the angular resolution of the letter 204 in this particular situation can be approximated as *θ* = 2arctan (*h*/2*d*).

In humans, "normal vision" is usually defined as having a visual acuity of at least 1 arc minute. In other words, physical objects which have an angular resolution lower than 1 arc minute relative to the eye will not be distinguishable from other similar objects by most humans. This results in physical objects having details with an angular resolution lower than 1 arc minute looking blurry.

Visual acuity is often tested with the Snellen chart. In the Snellen chart, normal vision (i.e. 20/20 vision or 6/6 vision) is defined as being able to read most letters in a line of letters, where each letter has an angular resolution of 5 arc minutes. The details of each letter in the 20/20 line has an angular resolution of 1 arc minute.

However, the Snellen chart is shown in optimal lighting conditions and with high contrast between the letters and the background. It has been shown that in low light conditions, visual acuity can be significantly reduced (e.g. visual acuity of 2 arc minutes or higher). Thus, one can foresee that a person's visual acuity can significantly differ based on the environmental conditions. In particularly sub-optimal conditions (e.g. low lighting, low contrast and use of intricately detailed letters), some writing may look blurry to the person even if the letters themselves have a relatively high angular resolution.

One method for generating a digital copy of a physical object which is clearer to a user than their view of the physical object is to use a corresponding camera able to capture more detail than is visible to the person. Thus, the angular resolution of the camera is relevant. For easy comparison with human visual acuity, the angular resolution of the camera is defined in terms of arc minutes per pixel. In other words, the angular resolution of the camera provides an indication of the details which may be visible in an image from the camera. The angular resolution of the camera will depend on the corresponding number of pixels and the field of view.

As an example, Table 1 below shows angular resolution values for a group of typical cameras resolutions:

| **Resolution** | **Number of pixels (Horizontal × Vertical)** | **Field of view (degrees)** | **Angular resolution (arc minutes per pixel)** |
|---|---|---|---|
| 1080p | 1920 × 1080 | 90 | 2.81 |
| | | 120 | 3.75 |
| 1440p | 2560 × 1440 | 90 | 2.11 |
| | | 120 | 2.81 |
| 4K | 3840 × 2160 | 90 | 1.41 |
| | | 120 | 1.88 |
| 8K | 7680 × 4320 | 90 | 0.70 |
| | | 120 | 0.94 |

Thus, the choice of camera may depend on the specific needs of the user and, in particular, to the environmental conditions in which it will be used. For example, in low light conditions, the user may only have an effective visual acuity of around 2.5 arc minutes and thus a 1440p camera at 90 degrees FOV would provide more detail. However, in a large proportion of environments, 4K or 8K cameras may be needed to provide better detail.

In practice, it is highly unlikely a user with normal vision will have a consistent visual acuity of 1 arc minute as most physical scenes will not have optimal lighting and contrast. Thus, 4K and 8K cameras are very likely to provide more detail than a human eye in most situations.

The higher detail of these cameras enables their images to be enlarged (e.g. zoomed in) such that the user can see details in the images which would not be clearly visible to the user. Thus, digital copies of physical objects obtained with these cameras can be enlarged to show said details to the user wearing the MR headset.

Fig. 3 shows an illustration of a mixed reality system for displaying digital content in the form of an MR headset 300. The MR headset 300 comprises multiple cameras 302. Preferably, the cameras are able to record video in at least 4K resolution. Additionally, the MR headset 300 preferably comprises means for tracking the user's eye gaze, position and/or body movements (e.g. hand tracking).

The MR headset 300 may form part of a MR system as previously described. The system also comprises a processing system shown schematically as 303 (i.e. one or more processors) shown schematically as 303 capable of receiving the images from the cameras 302. An image recognition algorithm may be used on the images, wherein the image recognition algorithm is capable of detecting what the user is flagging as an object, or area, of interest by analyzing the video feed.

The processing system control a transparent display 304 over each eye, which enables digital content to be overlaid over the natural view of the physical scene in the field of view of the user.

The processing system can further edit the latest recorded footage of the object in real time to improve its visibility towards the user (e.g. change size, contrast, color, position, orientation). The MR system should be capable to render the manipulated digital copies in real-time overlaid on the corresponding physical object.

In an embodiment, the MR system can automatically turn a 2D digital copy into a 3D digital object that can be manipulated by the user. For example, the digital copy may converted into a wireframe of the physical object and transformed into a 3D render of said physical object.

In an embodiment, the digital copy can be attached to the user's finger (i.e. positioned at a location within the display that corresponds the direction of the user's gaze when looking at the tip of their finger), or other body part, or pinned in the current field of view (cockpit) so it is easily accessible when the user is not looking at the object. In some cases, the pinned digital copy may be a static copy of the last 'seen' frame by the cameras instead of a real-time copy.

In an embodiment, the MR system may distort an image from a single camera view to make the digital copy have a 3D effect.

In another embodiment, additional images could be obtained from other additional cameras in the same physical space as the user but not forming part of the MR headset. These additional images could be distorted based on the camera from which they are obtained and a spatial mapping of the headset relative to the additional cameras. Additionally, or alternatively, the additional images could be used and/or combined to give additional views or viewing angles (e.g. like looking around a corner or seeing behind an object).

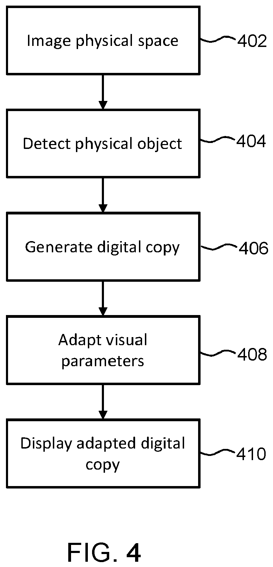

Fig. 4 shows a method for displaying digital objects in mixed reality. The method comprises imaging a physical space around a user wearing a head-mounted device in step 402. Images of the physical space are obtained from sensors on the head-mounted device.

The one or more sensors may comprise RGB cameras (or similar), infrared sensors, depth sensors and/or any other type of sensors capable of obtaining information of the physical space. At least one sensor may be mounted on the head-mounted device such that they are facing in substantially the same direction as the user. A sub-set of sensors may be mounted such that they are facing a direction more than 90 degrees from the user (i.e. facing away from the user). This may enable the sensors to image the physical space which the user cannot see.

The sensors may comprise at least one camera (i.e. RGB camera). The camera may be capable of imaging the physical scene at 4K pixel resolution. Preferably the camera (or any other sensors) are not large relative to the head-mounted device. The sensors may comprise at least two cameras at different positions on the head-mounted device, whereby the processor is configured to generate a 3D digital copy by interpolating both images.

Physical objects of interest are then detected in the images of the physical space in step 404 and digital copies of the physical objects are generated in step 406.

For example, detecting a physical object of interest in an image may be performed by using classification algorithms, object detection algorithms or similar.

A digital copy may comprise a cropped version of the image. The latest available image may be used. For example, in a video feed from cameras, the latest available frame may be used. Alternatively, a previous frame may be used (e.g. previous frame with better lighting). The user may be able to select whether they want a real time digital copy or a static copy.

The visual parameters of the digital copy are then adapted to improve visibility of the object in step 408 such that the adapted digital copy can be displayed over the user's view of the physical space in step 410.

In one case, generating the digital copy and adapting the visual parameters may be performed by generating a rendered version of the physical object with improved visibility over the physical object.

Adapting the visual parameters of the digital copy may comprise one or more of the following:
- Enlarging the digital copy relative to the physical object;
- Increasing the brightness of the digital copy;
- Increasing the contrast of the digital copy;
- Increasing the sharpness of the digital copy;
- Adapting the colors of the digital copy to colors which are more visible to the user (e.g. consider color blind users); and
- Applying an image upscaling/enhancing algorithm to the digital copy.

In addition to any of the above, the digital copy may need to be rotated (e.g. if writing is rotated such that it is difficult to read).

The aim of adapting the visual parameters of the digital copy is to improve the visibility of the digital copy relative to the physical object as seen by the user.

When enlarging the digital copy, it may be beneficial to use a camera with an angular resolution of 2.5 arc minutes per pixel or lower. In some cases, it may be more beneficial to use a camera with an angular resolution of 2 arc minutes per pixel or lower. In cases where the lighting/environmental conditions are particularly favorable, it may be beneficial to use a camera with an angular resolution of 1.5 arc minutes per pixel or lower.

The method may make use of a display system to display the digital copy. The display system may use a projector system to project the digital copy, and potentially other digital objects, to the glass of the head-mounted device (e.g. in MR headsets). Alternatively, a transparent screen may be used capable of displaying digital objects on a transparent surface.

The method may also comprise generating a 3D digital copy of the physical object (not shown in Fig. 4). The 3D digital copy may be generated using multiple cameras (mounted on the headset and/or additional cameras not mounted on the headset). If additional cameras are used (e.g. wall mounted), the 3D digital copy may be able to be rotated (e.g. to see the back of the physical object) more than only using cameras on the head-mounted device.

The method may also comprise pinning the digital copy (2D or 3D) to a body part of the user (not shown in Fig. 4). The digital copy could also be pinned to another object in the physical space (e.g. other person or inanimate object). This may be achieved by using an algorithm capable of detecting the location of said object/body part within the physical scene and overlaying the digital copy on the corresponding location.

The method shown in Fig. 4 may be implemented with the use of a processing system with one or more processors.

The skilled person would be readily capable of developing a processor for carrying out any herein described method. Thus, each step of a flow chart may represent a different action performed by a processor, and may be performed by a respective module of the processor.

The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A mixed reality system for displaying digital content comprising:
a head-mounted device (300) comprising:
one or more sensors (302) mounted on the head-mounted device and configured to image a physical space (100) around a user wearing the head-mounted device; and
a display system (304) adapted to overlay digital objects in the user's view of the physical space; and
a processor (303( configured to:
detect a physical object of interest (102) in the physical space based on the images of the one or more sensors;
generate a digital copy (108) of the physical object;
adapt one or more visual parameters of the digital copy thereby to improve the visibility of the digital copy; and
display the adapted digital copy using the display system (304).

2. The system of claim 1, wherein the processor is configured to adapt the one or more visual parameters by enlarging the digital copy of the physical object relative to the size of the physical object in the images of the physical space.

3. The system of claim 2, wherein the one or more sensors comprise one or more cameras capable of imaging the physical space at an angular resolution of at most 2.5 arc minutes per pixel.

4. The system of claim 3, wherein at least of the one or more cameras has a pixel resolution higher than 3000 pixels horizontally and 2000 pixels vertically.

5. The system of any one of the preceding claims, wherein the processor is configured to generate a digital copy of the physical object based on the latest available image from the one or more sensors which contains the physical object.

6. The system of any one of the preceding claims, wherein the processor is configured to adapt one or more visual parameters by changing one or more of:
one or more colors of the digital copy;
the contrast of the digital copy;
the brightness of the digital copy; and
the sharpness of the digital copy.

7. The system of any one of the preceding claims, wherein the one or more sensors comprise at least two sensors mounted at different positions on the head-mounted device and wherein the processor is configured to generate a three dimensional, 3D, digital copy of the physical object using the images of the physical object from both sensors.

8. The system of any one of claims 1 to 7, wherein the digital copy is distorted, thereby to generate a 3D digital copy.

9. The system of any one of claims 1 to 8, wherein the digital copy is pinned to a body part of the user and/or to a different physical object in the physical space.

10. A method for displaying digital content in mixed reality systems, the method comprising:
(402) imaging a physical space around a user wearing a head-mounted device;
(404) detecting a physical object of interest in the physical space based on the images;
(406) generating a digital copy of the physical object;
(408) adapting one or more visual parameters of the digital copy thereby to improve the visibility of the digital copy; and
(410) displaying the adapted digital copy overlaid on the user's view of the physical space

11. The method of claim 10, wherein adapting the one or more visual parameters comprises enlarging the digital copy of the physical object relative to the size of the physical object in the images of the physical space.

12. The system of claim 11, wherein the imaging the physical space comprises imaging the physical space at an angular resolution of at most 2.5 arc minutes per pixel.

13. The method of any one of claims 10 to 12, wherein generating a digital copy of the physical object is based on the latest available image.

14. The method of any one of claims 10 to 13, wherein adapting one or more visual parameters comprises changing one or more of:
one or more colors of the digital copy;
the contrast of the digital copy;
the brightness of the digital copy; and
the sharpness of the digital copy.

15. A computer program product comprising computer program code which, when executed on a computing device having a processing system, cause the processing system to perform all of the steps of the method according to any of claims 10 to 14.
